# FASCICULE DE BREVET EUROPEEN

(11) **EP 0 718 509 B1**
(45) Date de publication et mention de la délivrance du brevet: **27.01.1999**
(21) Numéro de dépôt: 95402586.2
(22) Date de dépôt: 17.11.1995
(51) Int. Cl.: F16B 37/06, B23P 19/06

(54) **Pièce allongée à sertir**
Kaltgenietetes Zapfenelement
Male clinch element

(30) Priorité: 23.11.1994 FR 9414026
(43) Date de publication de la demande: 26.06.1996
(73) Titulaire: FORMER, F-90100 Delle (FR)
(72) Inventeur: Gossart, Jacques, F-59410 Anzin (FR)
(74) Mandataire: Robert, Jean-Pierre

(56) Documents cités:
- EP-A- 0 561 715
- GB-A- 1 164 472
- US-A- 3 213 914

## Description

La présente invention concerne une pièce allongée à sertir, telle qu'une vis ou un pion de centrage, destinée à être fixée par sertissage sur un support tel qu'une tôle de carrosserie automobile. La présente invention concerne aussi un dispositif pour sertir un ensemble d'une pièce à sertir et d'un support selon le préambule de la revendication 7 (voir US-A-3 213 914).

On connait (voir EP-A-0 561 715) des vis à sertir comportant une tige et une tête perforatrice creuse formant un poinçon opposé à la tige dont les bords sont retournés vers l'extérieur pour être plaqués contre le support. Ces vis, dites auto-poinçonneuses, présentent l'avantage de permettre la réalisation du poinçonnement du support et du sertissage en une seule opération. La résistance au couple de dessertissage, c'est-à-dire à un mouvement de rotation de la vis par rapport au support, est obtenue par encastrement dans le support de reliefs ménagés sur la tête de la vis en regard de ce support. Cette résistance est en général satisfaisante car les couples exercés sur la vis sont très faibles. Par contre, la résistance à un effort de dessertissage, c'est-à-dire à un mouvement d'arrachement axial de la vis par rapport au support, dans le sens de travail de la vis doit répondre à des exigences de qualité strictes. Or, avec de telles vis cette résistance dépend de la qualité de l'opération de déformation de la tête de la vis. Autrement dit, la qualité de résistance mécanique de la vis dépend de l'opération de sertissage. En outre, la chute de métal issue du poinçonnage reste emprisonnée de manière non contrôlée dans la tête de la vis et risque de se détacher intempestivement et d'occasionner des bruits de vibration (par exemple dans un cloisonnement de carrosserie automobile).

On connaît par ailleurs des vis à sertir ayant une forme de vis classique. Avec de telles vis, le support doit être préalablement percé. La vis est alors logée dans le perçage et sa tête vient en appui contre le support. Le sertissage est réalisé en écrasant la partie du support située en périphérie du perçage entre la tête et une matrice de sertissage. Il se produit alors un fluage de la partie écrasée du support, celle-ci venant remplir une gorge de la vis ménagée sous la tête. Avec ce type de vis, la résistance à un effort de dessertissage dans le sens de travail de la vis est directement assurée par la tête de la vis qui n'a subi aucune déformation et dont les caractéristiques mécaniques restent indépendantes de l'opération de sertissage. La résistance au couple de dessertissage est assurée de la même manière que précédemment, par encastrement dans le support de reliefs ménagés sur la tête de la vis. Toutefois, la fabrication de telles vis par frappe à froid, et en particulier la réalisation de la gorge, s'avère difficile dans la pratique.

On connaît également (voir également EP-A-0 561 715) des vis à sertir destinées à être fixées sur un support préalablement percé, qui, en plus de cette gorge sous la tête, présente une gorge dans la face transversale inférieure de la tête avec un rebord périphérique en forme de jupe délimitant cette gorge. La zone du support située en périphérie du perçage est ainsi repoussée par la matrice de sertissage dans la gorge de la tête de la vis, puis écrasée entre la matrice et le fond de la gorge pour subir un fluage et remplir la quasi totalité des gorges, assurant ainsi l'encastrement de la vis sur le support. Toutefois, l'opération de sertissage est difficile à mettre en oeuvre dans la pratique et la résistance à un effort de dessertissage dans le sens contraire du sens du travail de la vis ou à un couple de dessertissage peut être insatisfaisante car l'encastrement du support sur la tête de la vis est précaire. De plus, le positionnement et le maintien en géométrie de la vis dans le perçage du support par rapport à celui-ci n'est pas d'une très grande précision.

La présente invention entend proposer une pièce allongée à sertir, telle qu'une vis ou un pion de centrage, du type comportant une tête à jupe périphérique délimitant une gorge pour l'encastrement du support, ne présentant pas les inconvénients précités.

Plus précisément, la présente invention concerne une pièce allongée à sertir sur un support préalablement percé, comportant une tige et une tête présentant une gorge délimitée par un rebord périphérique en forme de jupe ayant un bord d'appui, la tige comportant une section fonctionnelle et une section de sertissage entourée par la jupe de diamètre supérieur à celui de la section fonctionnelle et raccordée à la section fonctionnelle par un épaulement situé au-delà du bord d'appui de la jupe suivant la direction axiale de la pièce.

L'opération de sertissage, qui s'effectue au moyen d'un dispositif de sertissage qui sera défini ultérieurement, consiste alors d'une part à enfoncer la zone du support située en périphérie du perçage dans la gorge de la tête de la vis et d'autre part à repousser au moins la partie de la section de sertissage voisine de l'épaulement contre le support pour former un collet assurant un encastrement positif de la vis sur le support. On obtient ainsi une résistance élevée à un effort de dessertissage non seulement dans le sens de travail de la vis puisque celle-ci conserve ses caractéristiques mécaniques, mais aussi dans le sens inverse grâce à l'encastrement positif du support entre la tête de vis et le collet ainsi formé.

Lorsque la pièce est associée à un support percé, la tige étant placée dans l'orifice du support pour former un ensemble prêt à être serti, la distance séparant l'épaulement du bord de la jupe est au moins égale à l'épaisseur du support.

Selon une autre caractéristique avantageuse de l'invention, le fond de la gorge présente un relief en creux. Ainsi, lorsque la section de sertissage est déformée plastiquement et repoussée contre le support, la zone du support qui est enfoncée dans la gorge de la tête de vis peut fluer à l'intérieur du relief en creux sous l'effet de l'effort de poussée exercé par le dispositif de sertissage directement ou par l'intermédiaire de la section de sertissage déformée. Ce relief en creux forme ainsi un volume tampon capable d'absorber un surplus de métal à l'intérieur de la gorge de la tête de vis. Ce surplus de métal peut provenir de différences d'épaisseurs du support ou des incertitudes de course du dispositif de sertissage. En particulier, il est ainsi possible de conserver un même réglage du dispositif de sertissage pour des supports d'épaisseurs différentes.

Selon une autre caractéristique avantageuse de l'invention, le rebord périphérique a une face interne de forme conique convergente en direction de l'extrémité libre de la tige. Cette face conique en contre-dépouille délimite un coin à l'intérieur duquel vient se loger par fluage la zone du support qui est enfoncée dans la gorge. De cette manière, on améliore l'encastrement de la vis sur le support.

On pourra également réaliser un rebord périphérique ayant une face interne divisée en une succession de portions périphériques de formes alternativement conique et cylindrique. On réalise ainsi un encastrement supplémentaire de la tête sur le support, encastrement qui s'oppose au couple de dessertissage.

Pour faciliter le centrage de la pièce allongée sur son support, on pourra réaliser une pièce allongée dont la tête présente, sur sa face opposée à la tige, un évidement conique de centrage coaxial à la tige et dont la tige comporte une extrémité conique de centrage.

La présente invention a également pour objet un dispositif pour sertir une pièce allongée du type précité avec un support percé dans l'orifice duquel la tige de la pièce est logée. Ce dispositif comporte selon l'invention une matrice de sertissage présentant une face d'appui, un perçage sensiblement perpendiculaire à la face d'appui et un rebord ménagé en saillie sur la face d'appui autour du perçage, ce perçage possédant une partie terminale évasée formant une face d'appui oblique du rebord.

Selon une caractéristique avantageuse, ce dispositif comporte des moyens de centrage de la pièce allongée par rapport au support, ces moyens coopérant avec l'évidement conique et avec l'extrémité conique de la pièce allongée.

Pour réaliser un encastrement de la vis sur le support s'opposant convenablement au couple de dessertissage, on pourra réaliser un dispositif dans lequel la face d'appui oblique du rebord est équipée de reliefs en saillie, ou encore dans lequel la face d'appui oblique du rebord n'est pas une surface de révolution.

D'autres caractéristiques et avantages de l'invention apparaîtront à la lecture de la description qui suit de modes de réalisation particuliers non limitatifs en liaison avec les figures en annexe, parmi lesquelles :
- la figure 1 est une vue en perspective d'une vis à sertir selon l'invention ;
- la figure 2 est une vue en coupe par un plan axial de la vis à sertir de la figure 1, représentée avec son support avant sertissage ;
- la figure 3 est une vue en coupe par un plan axial, montrant la vis avec son support, tous deux mis en place sur un dispositif de sertissage ;
- la figure 4 est une vue analogue à la figure 3, illustrant l'état de la vis et de son support après sertissage ;
- la figure 5 est une vue partielle en perspective illustrant le détail d'une variante de réalisation d'une matrice de sertissage du dispositif de sertissage selon l'invention.

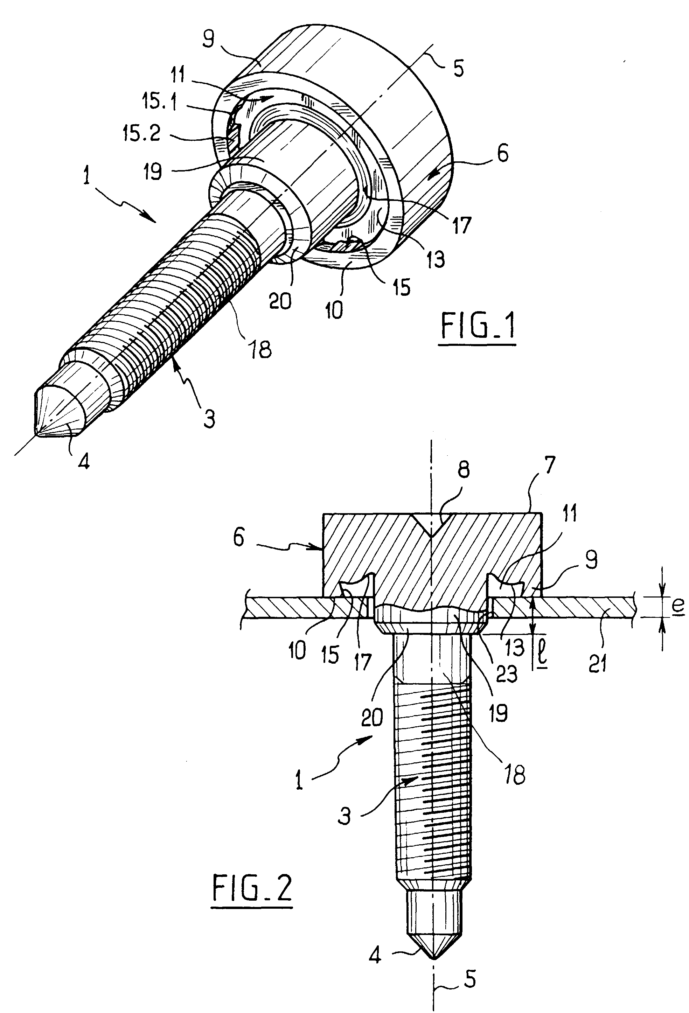

En référence aux figures, et en particulier aux figures 1 et 2, la vis à sertir, désignée dans son ensemble en 1, comporte une tige filetée 3 ayant un axe 5 et présentant ici une extrémité libre 4 de forme conique. A l'extrémité opposée de la tige 3, la vis 1 possède une tête 6 coaxiale à et sensiblement plus large que la tige 3.

La tête 6 présente, à l'opposé de la tige 3, une face transversale supérieure 7 sur laquelle est ménagée un évidement conique 8 d'axe 5. A l'opposé de cette face 7, la tête 6 présente une gorge 11 délimitée par un rebord périphérique 9 en forme de jupe dont l'extrémité libre présente un bord d'appui 10. Cette gorge 11 possède un fond 13 et est bordée par une face interne 15 de la jupe 9.

Dans l'exemple illustré, cette face 15 est de forme conique, convergente en direction de l'extrémité libre de la tige 3 et forme ainsi une contre-dépouille, comme cela est mieux visible à la figure 2. Mais cette caractéristique, bien qu'avantageuse, n'est nullement limitative et l'on pourra également réaliser une face 15 de forme cylindrique ou encore de forme conique divergente en direction de l'extrémité libre de la tige 3 si l'on souhaite privilégier la facilité de fabrication de la vis 1.

En outre, comme cela est visible à la figure 1, on a réalisé, en vue de s'opposer au couple de dessertissage, une face interne 15 équipée de reliefs en saillie. En l'espèce, la face 15 est divisée en une succession de portions conique 15.1 et cylindriques 15.2.

En variante non représentée, le fond 13 pourra, pour s'opposer au couple de dessertissage, présenter, de manière connue en elle-même, des rugosités ou reliefs en creux ou en saillie irréguliers autour de l'axe 5.

Par ailleurs, le fond 13 de la gorge 11 présente un relief en creux 17 de révolution autour de l'axe 5. Ce relief est ici adjacent à la tige 3 et possède une section qui rappelle la forme d'une goutte d'eau. Comme cela sera mieux explicité ultérieurement, l'existence de ce relief en creux est fort avantageux mais pas indispensable. En outre, sa forme en surface de révolution à section en forme de goutte d'eau n'est pas limitative et il pourra être réalisé un relief en creux irrégulier autour de l'axe 5 et/ou ayant une section de toute autre forme (carrée, triangulaire, etc.).

La tige 3 comporte une section fonctionnelle 18 et comporte une section de sertissage 19 sensiblement plus étroite que la tête 6 et plus large que la section 18 et se raccordant à cette section 18 par un épaulement 20. Dans le cas de la figure, cette section 19 s'étend en saillie par rapport au bord 10 de la jupe 9 sur une longueur l sensiblement plus grande que l'épaisseur e d'un support 21 sur lequel la vis 1 est destinée à être sertie. Cette condition n'est cependant pas indispensable et l'épaulement 20 peut être distant du bord 10 d'une longueur inférieure à cette épaisseur. Ce support 21, qui est une plaque métallique, présente un perçage 23 légèrement plus large que la section 19. En outre, afin de faciliter l'introduction de la section de sertissage 19 dans le perçage 23 du support 21, l'épaulement 20 est en forme de chanfrein d'extrémité.

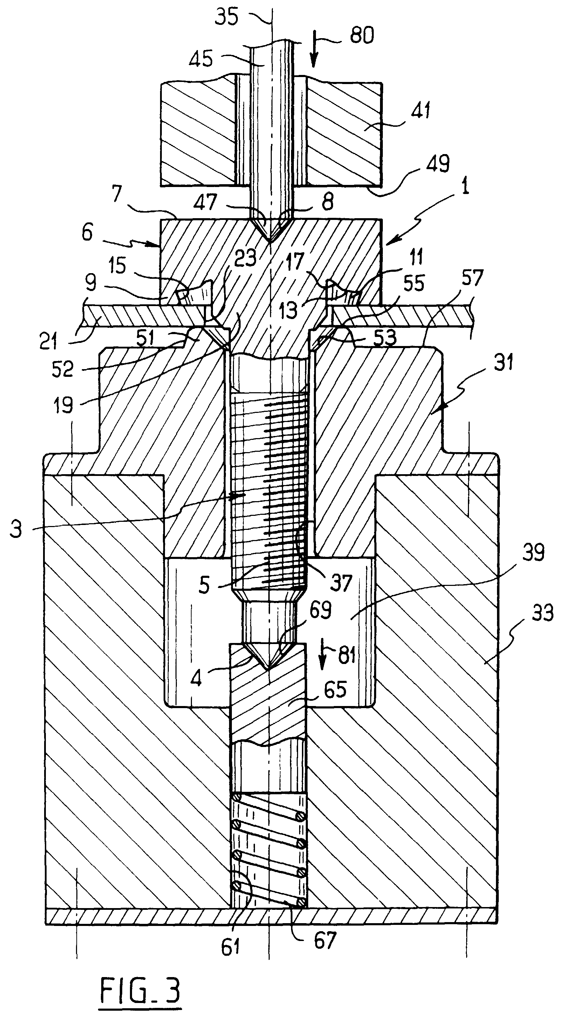

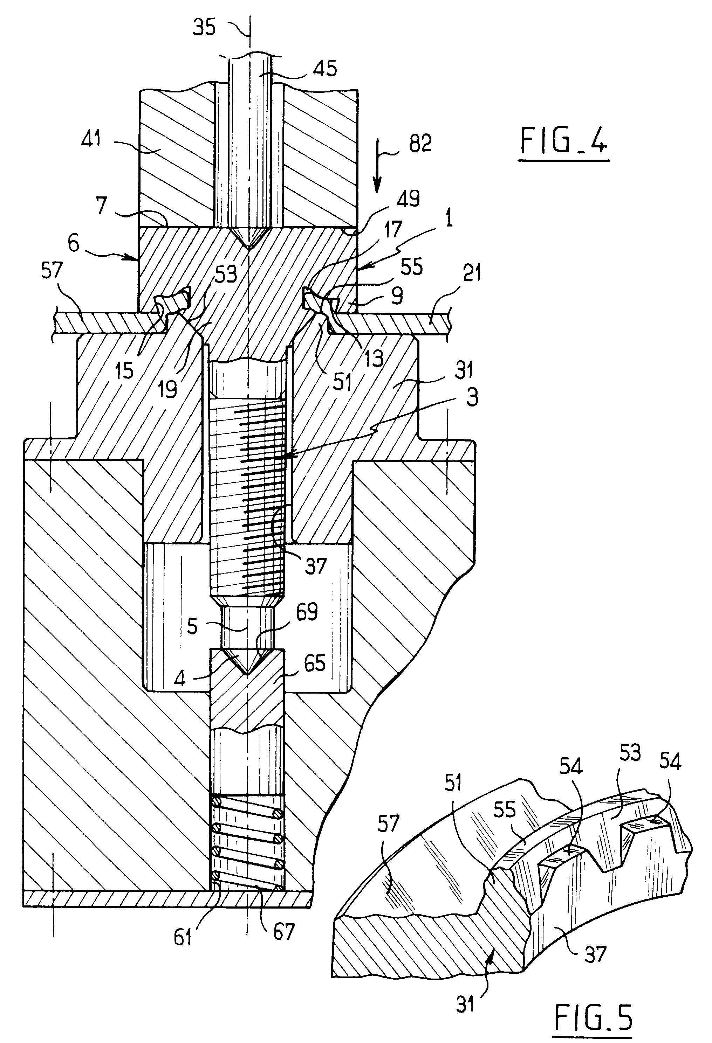

L'opération de sertissage en elle-même est réalisée au moyen d'un dispositif de sertissage particulier représenté aux figures 3 et 4. Ce dispositif comporte une matrice de sertissage 31 montée sur un socle 33. La matrice 31 possède une face supérieure d'appui 57 et un perçage débouchant 37 d'axe 35 sensiblement transversale à la face d'appui 57. Le perçage débouchant 37 est de diamètre légèrement plus grand que celui de la tige 3 de la vis 1. Un rebord 51 centré sur l'axe 35 s'étend en saillie depuis la face 57 sur une hauteur légèrement supérieure à la profondeur de la gorge 11. De plus, ce rebord possède une face latérale extérieure 52 qui est ici de forme conique divergente en direction de la face 57 de manière à former une surface de dépouille. Le grand diamètre de cette face conique 52 est légèrement plus petit que le plus petit diamètre de la face conique 15 de la jupe 9.

Le perçage 37 débouche au centre du rebord 51 en formant une surface intérieure évasée 53 qui est ici de forme conique. On distingue ainsi une face d'appui transversale 55 qui est constituée par le bord supérieur du rebord 51, une face d'appui transversale 57 qui est elle aussi perpendiculaire à l'axe 35 et une face d'appui oblique qui est constituée par la surface conique 53. Cette face d'appui oblique 53 pourra être constituée par un congé de forme autre que conique dont la géométrie exacte sera déterminée aux essais pour optimiser les déplacements de matière de la section de sertissage lors de la formation du collet. On pourra par exemple réalisé une portion de tore.

A l'aplomb de la matrice 31, est disposée une tête de sertissage 41 formant poussoir, entraînée par exemple par une presse. L'extrémité libre de ce poussoir 41 présente une face terminale 49 sensiblement perpendiculaire à l'axe 35. De plus, un doigt de centrage 45 d'axe 35, qui présente une extrémité libre 47 de forme conique, traverse librement la plaque 41.

Par ailleurs, le socle 33 présente un perçage central 61 qui débouche à l'intérieur d'une cavité 39 en regard du perçage 37 de la matrice 31. Un coulisseau de centrage 65 est monté dans le perçage 61 pour coulisser suivant l'axe 35 en étant rappelé élastiquement en direction de la matrice 37 par un ressort de rappel 67. Une cavité conique 69 d'axe 35 est ménagée en bout du coulisseau 65, en regard du perçage 37 de la matrice 31.

Pour sertir la vis 1 sur le support 21, celui-ci est disposé sur la matrice 31 par des moyens d'amenée et de mise en géométrie (non représentés), de telle sorte que l'axe du perçage 23 de ce support coïncide avec l'axe 35 du dispositif de sertissage. L'extrémité conique 4 de la vis 1 est reçue dans la cavité conique 69 du coulisseau 65 tandis que le doigt de centrage 45 pénètre dans l'évidement conique 8 de la tête 6 de la vis 1 pour centrer cette vis sur l'axe 35 du dispositif de sertissage. Le doigt 45 coulisse ensuite suivant l'axe 35 en direction de la matrice 31 pour loger la vis 1 dans le perçage 23 du support 21 et le perçage 37 de la matrice 31 et plaquer cette vis 1 contre le support 21, comme symbolisé par la flèche 80 de la figure 3. Lors de ce mouvement de translation de la vis 1, le coulisseau 65 coulisse dans le perçage 61 du socle 33 à l'encontre du ressort 67, comme symbolisé par la flèche 81.

Le poussoir 41 est ensuite entraînée suivant l'axe 35 en direction de la tête 1 indépendamment du doigt de centrage 45, comme symbolisé par la flèche 82 de la figure 4. Lorsque la face d'appui 49 du poussoir 41 parvient au contact de la face 7 de la tête 6 de la vis 1, celle-ci est entraînée, avec le doigt de centrage 45 en direction de la matrice 31. Le support 21 est repoussé par la jupe 9 en direction de la face 57 de la matrice 31, tandis que le rebord 51 de cette matrice repousse la zone du support 21 qui se trouve en périphérie du perçage 23 à l'intérieur de la gorge 13 de la vis 1. Simultanément, la face d'appui conique 53 de la matrice 31 déforme la section 19 de la vis 1 en repoussant la matière formant cette section contre la périphérie déformée du perçage 23 du support 21 de manière à former un collet.

Lorsque la zone déformée du support 21 parvient en appui contre le fond 13 de la gorge 11, le poussoir 41 poursuit sa course. Ainsi, la formation du collet par déformation de la section de sertissage se complète, tandis que, simultanément, la zone déformée du support 21 est comprimée pour fluer entre le fond de cette gorge et la face d'appui 55 du rebord 51 de la matrice 31. On notera à ce propos que, pour obtenir un tel fluage, la hauteur du rebord 51 de la matrice 31 doit, conformément à une caractéristique mentionnée précédemment, être supérieure à la profondeur de la gorge 11. La matière constitutive de cette zone déformée remplit alors par fluage la quasi totalité du volume intérieur de la gorge 11. En particulier, cette matière remplit les coins de contre-dépouille délimités par le fond 13 et les portions coniques 15.1 de la face 15 pour renforcer l'encastrement de la vis sur son support. On remarquera également que la matière épouse les irrégularités de la face 15 formées par l'alternance de ses portions coniques 15.1 et cylindriques 15.2. On obtient ainsi un ancrage de la vis sur son support s'opposant au couple de dessertissage.

En fin de course du poussoir 41, le collet formé par la matière déformée qui constituait la section 19 exerce sur la zone déformée du support 21 une pression supplémentaire tendant à plaquer cette zone contre le fond de la gorge 13, de sorte que la matière en cours de fluage est emprisonnée entre le fond 13 de la gorge 11 et le collet formé. La zone déformée du support 21 peut alors migrer dans le relief en creux 17 qui est ménagé dans le fond de la gorge 13 de la vis 1 et qui forme ainsi un volume tampon. Cette possibilité d'absorption du surplus de matière permet de tolérer des incertitudes de course du poussoir 41 ainsi que de conserver un même dispositif de sertissage et un même type de vis pour différentes épaisseurs du support 21.

On a ainsi obtenu une vis sertie dont la tête n'a subit aucune déformation et donc dont les caractéristiques mécaniques restent celles d'une vis de type classique. En conséquence, la résistance à un effort de dessertissage dans le sens de travail de la vis est indépendante de l'opération de sertissage.

De plus, on obtient également une bonne résistance à un effort de dessertissage dans le sens inverse du sens de travail de la vis grâce à l'encastrement positif de la vis sur le support assuré par le collet formée.

A la figure 5, on a représenté une variante de réalisation de la matrice de sertissage 31. La face conique 53 de cette matrice est ici équipée de reliefs en saillie 54 formant une denture. Ainsi, lors du sertissage de la vis sur son support, la section de sertissage est déformée de façon irrégulière par les reliefs 54, de sorte que la zone de cette section qui est en regard du perçage 23 du support 21 se déforme selon un contour qui n'est pas de révolution autour de l'axe 35. Ainsi, lors du fluage de la zone périphérique du perçage 23 du support 21 à l'intérieur de la gorge 11, le bord de cette zone épouse à son tour le contour déformé de la zone en regard de la section de sertissage pour réaliser un assemblage s'opposant au couple de dessertissage.

A titre de variante, on pourra également réaliser une matrice de sertissage ayant un rebord qui ne soit pas de révolution autour de l'axe 35 (par exemple ovale ou polygonal), présentant une face intérieure évasée et non dentée.

Enfin, il sera également possible de réaliser dans le support un perçage non circulaire et, de préférence, une matrice de sertissage ayant un rebord de forme complémentaire à ce perçage. Dans ce cas, c'est la section de sertissage de la vis qui épouse lors de sa déformation le contour non circulaire du perçage réalisé dans le support.

L'invention n'est pas limitée aux modes de réalisation qui viennent d'être décrits mais englobe au contraire toute pièce allongée et tout dispositif pour son sertissage reprenant, avec des moyens équivalents, les caractéristiques essentielles énoncées ci-dessus. En particulier, bien que l'on ait décrit une vis à sertir, il est bien entendu possible de réaliser toute autre pièce allongée à sertir présentant les mêmes caractéristiques structurelles pour son sertissage sur le support (pions, axes, pivots, doigts, entretoises creuses,...).

## Revendications

1. Pièce allongée à sertir sur un support (21) préalablement percé, comportant une tige (3) et une tête (6) présentant une gorge (11) délimitée par un rebord périphérique (9) en forme de jupe ayant un bord d'appui (10), caractérisée en ce que la tige (3) comporte une section fonctionnelle (18) et une section de sertissage (19) entourée par la jupe (9) de diamètre supérieur à celui de la section fonctionnelle, et raccordée à la section fonctionnelle par un épaulement (20) situé au-delà du bord d'appui (10) de la jupe suivant la direction (5) axiale de la pièce.

2. Pièce selon la revendication 1, caractérisée en ce que le fond (13) de la gorge (11) présente un relief en creux (17).

3. Pièce selon l'une des revendications précédentes, caractérisée en ce que le rebord périphérique (9) a une face interne (15) de la contre-dépouille, présentant au moins une portion de forme conique convergente en direction de l'extrémité libre de la tige (3).

4. Pièce selon la revendication 3, caractérisée en ce que le rebord périphérique (9) a une face interne (15) divisée en une succession de portions de formes alternativement conique et cylindrique.

5. Pièce selon l'une des revendications précédentes, caractérisée en ce que la tête (6) présente, sur sa face opposée à la tige (3), un évidement de centrage (8) coaxial à la tige (3) et en ce que la tige (3) comporte une extrémité de centrage (4).

6. Ensemble d'une pièce selon l'une des revendications précédentes et d'un support (21) percé d'un orifice (23) dans lequel la tige de la pièce est introduite, caractérisé en ce que la distance (1) séparant l'épaulement (20) de raccordement de la section de sertissage (19) à la section fonctionnelle (18) du bord (10) de la jupe (9) est au moins égale à l'épaisseur (e) du support (21) au voisinage de l'orifice (23).

7. Dispositif pour sertir un ensemble selon la revendication 6, comportant une matrice de sertissage (31) présentant une face d'appui (57), un perçage (37) sensiblement perpendiculaire à la face d'appui (57) et un rebord (51) ménagé en saillie sur la face d'appui (57) autour du perçage (37), caractérisé en ce que le perçage (37) possède une partie terminale évasée (53) formant une face d'appui oblique du rebord (51).

8. Dispositif selon la revendication 7 prise en dépendance de la revendication 5, caractérisé en ce qu'il comporte des moyens de centrage (45, 65) de la pièce allongée (1) par rapport au support (21), ces moyens coopérant avec l'évidement de centrage (8) et avec l'extrémité de centrage (4) de la pièce allongée (1).

9. Dispositif selon la revendication 7 ou la revendication 8, caractérisé en ce que la face d'appui oblique (53) du rebord (51) est équipée de reliefs en saillie (54).

10. Dispositif selon la revendication 7 ou la revendication 8, caractérisé en ce que la face d'appui oblique (53) du rebord (51) n'est pas une surface de révolution.

## Patentansprüche

1. Längliches Nietelement zum Annieten an einen vorher durchgebohrten Träger (21), umfassend einen Schaft (3) und einen Kopf (6) mit einer Nut (11), die von einer glockenförmig umlaufenden, einen Auflagerand (10) aufweisenden Schürze (9) begrenzt wird, dadurch **gekennzeichnet**, dass der Schaft (3) einen Funktionsabschnitt (18) und einen von der Schürze (9) umgebenen Nietabschnitt (19) umfasst, der einen gegenüber dem Funktionsabschnitt (18) größeren Durchmesser hat und mit dem Funktionsabschnitt über eine Schulter (20) verbunden ist, die in axialer Richtung (5) des Elementes jenseits des Auflagerandes (10) der Schürze liegt.

2. Element nach Anspruch 1, dadurch **gekennzeichnet**, dass der Boden (13) der Nut (11) ein Hohlrelief (17) hat.

3. Element nach einem der vorangegangenen Ansprüche, dadurch **gekennzeichnet**, dass die umlaufende Schürze (9) eine eine Hinterschneidung bildende Innenfläche (15) hat, die mindestens einen konisch geformten zum freien Ende des Schaftes (3) hin konvergierenden Abschnitt hat.

4. Element nach Anspruch 3, dadurch **gekennzeichnet**, dass die umlaufende Schürze (9) eine Innenfläche (15) hat, die in alternierend aufeinanderfolgende zylindrische und konische Abschnitte unterteilt ist.

5. Element nach einem der vorangegangenen Ansprüche, dadurch **gekennzeichnet**, dass der Kopf (6) an seiner dem Schaft (3) abgewandten Fläche eine zum Schaft (3) koaxiale Zentrieraussparung (8) hat und dass der Schaft (3) ein Zentrierende (4) hat.

6. Anordnung eines Elementes nach einem der vorangegangenen Ansprüche und eines Trägers (21), der mit einer Öffnung (23) versehen ist, in die der Schaft des Elementes eingesteckt ist, dadurch **gekennzeichnet**, dass der Abstand (1), der die den Nietabschnitt (19) mit dem Funktionsabschnitt (18) verbindende Schulter (20) von dem Auflagerand (10) der Schürze (9) trennt, mindestens gleich der Dicke (e) des Trägers (21) im Bereich der Öffnung (23) ist.

7. Vorrichtung zum Vernieten einer Anordnung nach Anspruch 6, umfassend eine Nietmatrize (31) mit einer Auflagefläche (57), eine im wesentlichen senkrecht zur Auflagefläche (57) gerichtete Bohrung (37) und einen Ansatz (51), der die Bohrung (37) umgebend von der Auflagefläche (57) absteht, dadurch **gekennzeichnet**, dass die Bohrung (37) einen aufgeweiteten Endabschnitt (53) hat, der eine schräge Anschlagfläche des Ansatzes (51) bildet.

8. Vorrichtung nach Anspruch 7 in Verbindung mit Anspruch 5, dadurch **gekennzeichnet**, dass sie Zentriermittel (45, 65) zum Zentrieren des länglichen Elementes (1) bezüglich des Trägers (21) hat, wobei diese Zentriermittel mit der Zentrieraussparung (8) und mit dem Zentrierende (4) des länglichen Elementes (1) zusammenwirken.

9. Vorrichtung nach Anspruch 7 oder 8, dadurch **gekennzeichnet**, dass die schräge Anschlagfläche (53) des Ansatzes (51) mit Vorsprüngen (54) versehen ist.

10. Vorrichtung nach Anspruch 7 oder 8, dadurch **gekennzeichnet**, dass die schräge Anschlagfläche (53) des Ansatzes (51) keine Rotationsfläche ist.

## Claims

1. An elongate part to be crimped on to a previously pierced support (21), comprising a shank (3) and a head (6) having a groove (11) defined by a peripheral rim (9) in the form of a skirt having a support edge (10), characterised in that the shank (3) comprises a functional section (18) and a crimping section (19) surrounded by the skirt (9) of a larger diameter than the diameter of the functional section, and connected to the functional section by a shoulder (20) disposed beyond the support edge (10) of the skirt in the axial direction (5) of the part.

2. A part according to claim 1 characterised in that the bottom (13) of the groove (11) has a recessed relief (17).

3. A part according to one of the preceding claims characterised in that the peripheral rim (9) has an internal face (15) of undercut configuration, having at least one portion of a conical shape which is convergent in the direction of the free end of the shank (3).

4. A part according to claim 3 characterised in that the peripheral rim (9) has an internal face (15) divided into a succession of portions of alternately conical and cylindrical shapes.

5. A part according to one of the preceding claims characterised in that, on its face opposite to the shank (3), the head (6) has a centering recess (8) coaxial with the shank (3), and that the shank (3) comprises a centering end (4).

6. An assembly of a part according to one of the preceding claims and a support (21) pierced with an opening (23) into which the shank of the part is introduced, characterised in that the distance (ℓ) separating the shoulder (20) connecting the crimping section (19) to the functional section (18) from the edge (10) of the skirt (9) is at least equal to the thickness (e) of the support (21) in the vicinity of the opening (23).

7. An apparatus for crimping an assembly according to claim 6 comprising a crimping die (31) having a support face (57), an aperture (37) substantially perpendicular to the support face (57) and a rim portion (51) disposed in projecting relationship on the support face (57) around the aperture (37), characterised in that the aperture (37) has a flared terminal portion (53) forming an inclined support face of the rim portion (51).

8. Apparatus according to claim 7 when appendant to claim 5 characterised in that it comprises means (45, 65) for centering the elongate part (1) with respect to the support (21), said means co-operating with the centering recess (8) and with the centering end (4) of the elongate part (1).

9. Apparatus according to claim 7 or claim 8 characterised in that the inclined support face (53) of the rim portion (51) is provided with relief portions (54) in projecting relationship.

10. Apparatus according to claim 7 or claim 8 characterised in that the inclined support face (53) of the rim portion (51) is not a surface of revolution.
